# EUROPÄISCHE PATENTSCHRIFT

(11) **EP 2 138 330 B1**
(45) Veröffentlichungstag und Bekanntmachung des Hinweises auf die Patenterteilung: **13.07.2011**
(21) Anmeldenummer: 09159595.9
(22) Anmeldetag: 07.05.2009
(51) Int. Cl.: B60C 11/12

(54) **Fahrzeugluftreifen**
Pneumatic tyres for a vehicle
Pneus de véhicule

(30) Priorität: 28.06.2008 DE 102008030810
(43) Veröffentlichungstag der Anmeldung: 30.12.2009
(73) Patentinhaber: Continental Reifen Deutschland GmbH, 30165 Hannover (DE)
(72) Erfinder: Maggiora, Alberto, 30161, Hannover (DE); Milchers, Wolfgang, 31319, Sehnde (DE); Bolz, Gerrit Dr., 29308, Winsen (DE)
(74) Vertreter: Finger, Karsten

(56) Entgegenhaltungen:
- EP-A- 0 846 578
- EP-A- 1 170 153
- WO-A-01/60642
- WO-A-94/21478
- JP-A- 2000 094 908
- JP-A- 2001 071 330
- JP-A- 2004 314 758
- JP-A- 2006 069 440

## Beschreibung

Die Erfindung betrifft einen Fahrzeugluftreifen mit einem profilierten Laufstreifen mit Profilblöcken, die mit zumindest einem Einschnitt versehen sind, welcher im Radialschnitt und quer zu seiner Erstreckungsrichtung betrachtet, aus mindestens drei Abschnitten, die in einer Art Zick-Zack-Form aneinander anschließen, besteht, wobei, von der Profiloberfläche aus betrachtet, der erste und der dritte Abschnitt eine größere radiale Richtungskomponente aufweisen, als der diese Abschnitte verbindende zweite Abschnitt.

Es ist bekannt, dass Fahrzeugluftreifen mit Profilelementen, die mit Einschnitten versehen sind, unter bestimmten Fahrbedingungen, insbesondere auf nasser, vereister oder verschneiter Straße, wesentlich bessere Griffeigenschaften aufweisen als Reifen ohne Einschnitte oder mit wenigen Einschnitten im Laufstreifen. Darüber hinaus ist es bekannt, dass Laufstreifen mit in axialer Richtung verlaufenden Einschnitten beim ^{"}freien" bzw. durch äußere Krafteinwirkung weitgehend unbeeinflussten Abrollen einen gleichmäßigen Abrieb zeigen. Da die Einschnitte in den Profilblöcken eine Reduktion der Profilblocksteifigkeit zur Folge haben, tritt jedoch bei Brems- und Beschleunigungsmanövern erhöhter Abrieb auf, die Blöcke sind durch die Einschnitte zu weich und verformen sich leicht. Unter diesen "dynamischen" Fahrbedingungen wären möglichst steife Profilblöcke - ohne Einschnitte - für eine bessere Kraftübertragung und einen geringeren Abrieb von Vorteil.

Fahrzeugluftreifen mit Einschnitten im Laufstreifen sind in unterschiedlichen Ausführungsformen bekannt. Aus der WO-A-01/60642 ist ein Fahrzeugluftreifen mit einem profilierten Laufstreifen bekannt, welcher Profilblöcke mit einer Vielzahl von Einschnitten aufweist. Durch das Ausbilden von Vorsprüngen an den in radialer Richtung verlaufenden Einschnittwänden setzen sich diese Einschnitte im radialen Schnitt aus Abschnitten unterschiedlicher Breiten zusammen, wobei auch Abschnitte vorgesehen sein können, deren Breite sich in radialer Richtung ändert. Die EP-B-0 846 578 befasst sich mit der Gestaltung von Einschnitten, um unterschiedliche Steifigkeiten in Abhängigkeit von der Beanspruchungsrichtung, insbesondere in Abhängigkeit davon, ob die Beanspruchung in der einen oder in der anderen Orientierung der Umfangsrichtung erfolgt, zu erzielen. Die Profilelemente sind jeweils mit einer Anzahl von in der radialen Richtung unverzweigten Einschnitten versehen, welche sich aus einer alternierenden, mindestens zweifachen Abfolge von Abschnitten zusammensetzen, von welchen die einen Abschnitte unter einem spitzen Winkel von höchstens 35° und die anderen Abschnitte unter einem größeren Winkel zu einer Senkrechten auf die Profiloberfläche verlaufen. Der von der Profiloberfläche aus betrachtet erste Abschnitt ist ein solcher, welcher unter einem spitzen Winkel zu einer Senkrechten auf die Profiloberfläche verläuft. Erfolgt nun vom Untergrund aus betrachtet eine Kraftbeanspruchung gegen die Richtung der Neigung jener Abschnitte, die unter einem spitzen Winkel zur Profiloberfläche verlaufen, so wird das Profilelement derart verformt, dass sich die Einschnittwände im Bereich dieser Abschnitte zwar aneinander abstützen, dabei aber zum Teil aneinander abgleiten, also eine Schubbewegung gegeneinander ausführen. Bei dieser Beanspruchungsrichtung besitzt daher das Profilelement eine relativ geringe Steifigkeit. Wird das gleiche Profilelement in entgegengesetzter Richtung beansprucht, dann reagiert es wesentlich steifer, da sich die Einschnittwände der unter einem stumpfen Winkel zur Profiloberfläche verlaufenden Abschnitte so gegen einander abstützen, dass eine Schubbewegung im Wesentlichen unterbunden ist. Dabei berührt das Profilelement den Untergrund mit einem größeren Teil seiner Oberfläche.

Die Erfindung zielt darauf ab, einen Reifen der eingangs genannten Art derart zu gestalten, dass bei einem freien bzw. im Wesentlichen freien und von äußeren Kräften wenig beeinflussten Abrollen des Reifens, wie es im normalen Fahrbetrieb ohne exzessive Kräfte - Brems- und Beschleunigungskräfte oder Querkräfte - der Fall ist, dafür zu sorgen, dass die Profilblöcke eine geringe Steifigkeit aufweisen und somit eine relativ hohe Beweglichkeit der einzelnen Profilblockbereiche gegeben ist. Wirken jedoch hohe dynamische Kräfte, beispielsweise beim Bremsen und/oder beim Beschleunigen oder beim Kurvenfahren, auf die Profilblöcke, sollen diese ähnlich zu einschnittfreien Profilblöcken eine hohe Steifigkeit aufweisen. Dieses Ziel soll durch eine besondere Ausgestaltung der Einschnitte in den Profilblöcken erreicht werden.

Gelöst wird die gestellte Aufgabe erfindungsgemäß dadurch, dass der erste Abschnitt eine konstante Breite aufweist, und dass der zweite Abschnitt des Einschnittes breiter ausgeführt ist als der dritte Abschnitt des Einschnittes.

Gemäß einer bevorzugten Ausführungsform der Erfindung weist der Laufstreifen Profilelemente mit jeweils zumindest einem derart ausgeführten Einschnitt auf, wobei sich dieser Einschnitt im Wesentlichen in axialer Richtung beziehungsweise mehr in axialer Richtung als in Umfangsrichtung erstreckt. Gemäß einer weiteren bevorzugten Ausführungsform der Erfindung sind im Laufstreifen Profilelemente mit jeweils zumindest einem erfindungsgemäßen Einschnitt vorgesehen, welcher sich im Wesentlichen in Umfangsrichtung beziehungsweise mehr in Umfangrichtung als in axialer Richtung erstreckt.

Der erste und der dritte Abschnitt des Einschnittes mit eher hoher radialer Richtungskomponente erlauben gemeinsam mit dem zweiten, breiteren Abschnitt, der zugleich eine geringere radiale Richtungskomponente aufweist, unter den üblichen Belastungen beim freien Abrollen bzw. im normalen Fahrbetrieb des Reifens eine vergleichsweise hohe Verformbarkeit der Profilblöcke. Die Profilblöcke verhalten sich unter diesen normalen Laufbedingungen des Reifens wie Profilblöcke mit geringer Steifigkeit, was einen geringen Abrieb des Luftreifens unterstützt. Wirkt nun eine höhere Kraft - etwa eine Bremskraft, eine Beschleunigungskraft oder eine Seitenkraft - auf den Profilblock, treten - je nach der Anordnung der Einschnitte im Laufstreifen und der damit gegebenen Neigung der zweiten Abschnitte relativ zur Kraftrichtung - die Einschnittwände im Bereich des breiten zweiten Abschnittes miteinander in Kontakt und es wird eine Blockverformung weitgehend verhindert, die Blocksteifigkeit somit deutlich erhöht. Der gegenseitige Kontakt der Einschnittwände im zweiten Abschnitt verhindert eine relative Beweglichkeit des Profilblockes in den diesem benachbarten Einschnittabschnitten, die in radialer Richtung verlaufen. Die erzielbare definierte

Versteifung der Profilblöcke hat zur Folge, dass, etwa bei einem Bremsmanöver, erhöhter Laufstreifenabrieb in erwünschter Weise vermieden wird.

Bei einer bevorzugten Ausführungsform der Erfindung besteht der Einschnitt aus drei Abschnitten. Mit solchen Einschnitten lässt sich das Steifigkeitsverhalten der Profilblöcke, vor allem durch die Festlegung der Breite des zweiten Abschnittes, besonders effektiv beeinflussen.

Diesbezüglich ist es auch von Vorteil, wenn der erste und der dritte Abschnitt zueinander parallel und insbesondere zumindest im Wesentlichen in radialer Richtung verlaufen.

Gemäß der Erfindung sind auch Ausführungen möglich, bei welchen der erste und der dritte Abschnitt des Einschnittes unter einem spitzen Winkel von bis zu 30° zur radialen Richtung verlaufen. Damit kann eine Vergleichmäßigung des Bodenaufstandsdruckes des Profilblocks und eine besonders gute Wirkung der Einschnitte erreicht werden.

Der zweite Einschnittabschnitt kann gegenüber der radialen Richtung unterschiedlich geneigt angeordnet werden. Grundsätzlich stehen zwei Möglichkeiten zur Verfügung, nämlich, dass der zweite Abschnitt unter einem stumpfen Winkel, welcher insbesondere 165° beträgt, zur radialen Richtung verläuft, oder dass der zweite Abschnitt unter einem spitzen Winkel, welcher insbesondere mindestens 30° beträgt, zur radialen Richtung orientiert ist. Je nach Wahl dieses Winkels wirken erfindungsgemäße Einschnitte mehr oder weniger stark versteifend auf den Profilblock.

Die Breite des zweiten Abschnittes des Einschnittes kann über die Länge dieses Abschnittes konstant sein, insbesondere das 2- bis 4-Fache der Breite des dritten Abschnittes betragen. Alternativ kann vorgesehen sein, dass der zweite Abschnitt eine Breite aufweist, die zwischen dem dritten und dem ersten Abschnitt kontinuierlich größer wird. Die jeweilige Ausführung nimmt Einfluss auf den Anstieg der Steifigkeit des Profilblocks unter zunehmender Belastung. Bei einem breiter werdenden zweiten Abschnitt erfolgt eine mehr kontinuierliche Zunahme der Blocksteifigkeit mit zunehmenden Kräften.

Der erste Abschnitt des Einschnittes kann schmäler, gleich breit oder breiter ausgeführt sein, als der zweite Abschnitt. Die jeweilige Ausführung des ersten Abschnittes erlaubt eine Einflussnahme auf andere Profileigenschaften, beispielsweise die Griffeigenschaften.

Bei einer bevorzugten Ausführung des Einschnittes ist vorgesehen, dass an dem dritten Abschnitt fünf weitere Abschnitte anschließen, wobei der Sechste parallel zum Zweiten und der Siebente parallel zum Vierten verläuft, wobei diese Abschnitte abwechselnd einen Winkel, welcher zwischen 90° und 165° beträgt und einen Winkel, welcher zwischen 15° und 90° beträgt, mit der radialen Richtung einschließen und derart einen Zick-Zack-Verlauf des Einschnittes ergeben. Ein derartiger Zick-Zack-Verlauf mit einer größeren Anzahl von Abschnitten gewährleistet auch mit zunehmendem Abrieb das erwünschte Steifigkeitsverhalten des Profilblocks unter hohen Kräften, wie beispielsweise Brems- Beschleunigungs- oder Seitenkräften.

Ein derart in radialer Richtung mit einem Zick-Zack-Verlauf ausgeführter Einschnitt wird bevorzugt derart gestaltet, dass der erste und jeder zweite Abschnitt zumindest im Wesentlichen in radialer Richtung verlaufen und eine Breite aufweisen, die zwischen 0,4 mm und 0,6 mm beträgt, und dass die an die im Wesentlichen in radialer Richtung verlaufenden Abschnitte anschließenden Abschnitt eine Breite aufweisen, die das 2- bis 4-Fache der Breite der in radialer Richtung verlaufenden Abschnitte beträgt. Die mit derartigen Einschnitten erzielbare Steifigkeitserhöhung des Profilblocks lässt sich besonders gut einstellen.

Sind im Laufstreifen eines Fahrzeugluftreifens Profilelemente mit jeweils zumindest zwei Einschnitten vorgesehen, deren zweite Abschnitte bezüglich der Radialen zueinander entgegengesetzt gerichtet sind, wird dafür gesorgt, dass Einschnitte vorhanden sind, welche auch bei in entgegengesetzte Richtungen wirkenden Kräften eine Steifigkeitserhöhung des Profilblocks bewirken.

Dies wird auch bei einer Ausführung erreicht, bei der im Laufstreifen zumindest ein Profilelement vorgesehen ist, welches zumindest einen Einschnitt aufweist, dessen zweiter Abschnitt gegenüber der Radialen in eine bestimmte Richtung geneigt ist, und bei der ferner im Laufstreifen zumindest ein anderes Profilelement vorgesehen ist, welches zumindest einen Einschnitt aufweist, dessen zweiter Abschnitt gegensinnig zum zweiten Abschnitt des Einschnittes im erstgenannten Profilelement geneigt ist.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 eine Ansicht einiger Profilblöcke eines Laufstreifens eines Fahrzeugluftreifens mit einer Ausführungsform der Erfindung,
Fig. 2a, 2b und 2c radiale Schnitte durch einen Profilblock mit einer Ausführungsform der Erfindung im unbelastetem Zustand und unter unterschiedlicher Belastung,
Fig. 3a, 3b und 3c radiale Schnitte durch einen Profilblock mit einer weiteren Ausführungsvariante der Erfindung, ebenfalls im unbelastetem Zustand und unter unterschiedlichen Belastungen,
Fig. 4 anhand eines Diagramms das Steifigkeitsverhalten von Profilblöcken gemäß den Ausführungsvarianten aus Fig. 2a bis 2c und Fig. 3a bis 3c,
Fig. 5a, 5b und 5c radiale Schnitte durch eines Profilblock mit einer weiteren Ausführungsform der Erfindung und analog zu Fig. 2a bis 2c,
Fig. 6 ein Diagramm mit dem Steifigkeitsverhalten des Profilblöckes gemäß Fig. 5a bis 5c,
Fig. 7 eine Variante der in Fig. 5a bis 5c gezeigten Ausführungsform,
Fig. 8 eine Variante der in Fig. 2a gezeigten Ausführungsform,
Fig. 9a bis 9d eine andere Ausführungsform der Erfindung anhand radialer Schnitte durch einen Profilblock im unbelastetem Zustand und unter unterschiedlichen Belastungen,
Fig. 10 ein Diagramm mit dem Steifigkeitsverhalten des Profilblocks gemäß den Fig. 9a bis 9d,
Fig. 11 eine weitere Ausführungsform der Erfindung anhand eines radialen Schnittes durch einen Profilblock,
Fig. 12 ein Diagramm mit dem Steifigkeitsverhalten des Profilblocks gemäß Fig. 11,
Fig. 13a, 13b und 13c eine weitere Ausführungsvariante der Erfindung anhand von radialen Schnitten durch einen Profilblock und analog zu Fig. 2a bis 2c,
Fig. 14a, 14b und 14c eine andere Ausführungsvariante der Erfindung anhand von radialen Schnitten durch einen Profilblock und analog zu Fig. 2a bis 2c,
Fig. 15 ein Diagramm mit dem Steifigkeitsverhalten eines Profilblockes gemäß Fig. 14a bis 14c und
Fig. 16a, 16b und 16c eine Ausführungsvariante der Erfmdung mit sich in Umfangsrichtung erstreckenden erfindungsgemäßen Einschnitten, wobei Querschnitte durch den Laufstreifenbereich eines Reifens dargestellt sind.

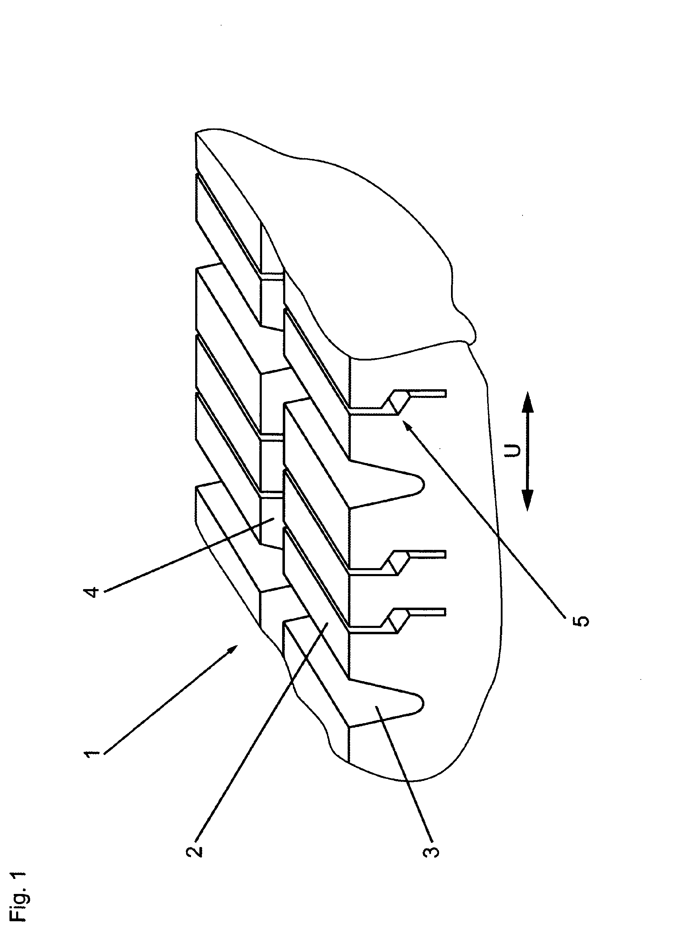

Fig. 1 zeigt eine Ansicht einiger Profilblöcke 2 eines Laufstreifens 1 eines Fahrzeugluftreifens. Die dargestellten Profilblöcke 2 sind in Blockreihen angeordnet, die in Umfangsrichtung, welche durch den Doppelpfeil U versinnbildlicht ist, verlaufen. Die beiden angedeuteten Profilblockreihen sind voneinander durch eine Umfangsnut 4, die Profilblöcke 2 innerhalb der Profilblockreihen sind durch Quernuten 3 voneinander getrennt. Die Profilblöcke 2 sind jeweils mit zwei Einschnitten 5 versehen, welche sich parallel zu den Quernuten und geradlinig erstrecken. Die Einschnitte 5 können, wie gezeigt, die Profilblöcke 2 komplett durchqueren. Alternativ zum geradlinigen Verlauf ist ein zick-zack- oder wellenförmiger Verlauf möglich. Pro Profilblock 2 kann auch nur ein Einschnitt 5 oder es können mehr als zwei Einschnitte 5 vorgesehen sein. Die Einschnitte 5 weisen eine radiale Erstreckung (Tiefe) auf, welche der Tiefe der Quernuten 3 entspricht, sie können jedoch auch zumindest abschnittsweise eine geringere Tiefe als die Quernuten 3 aufweisen.

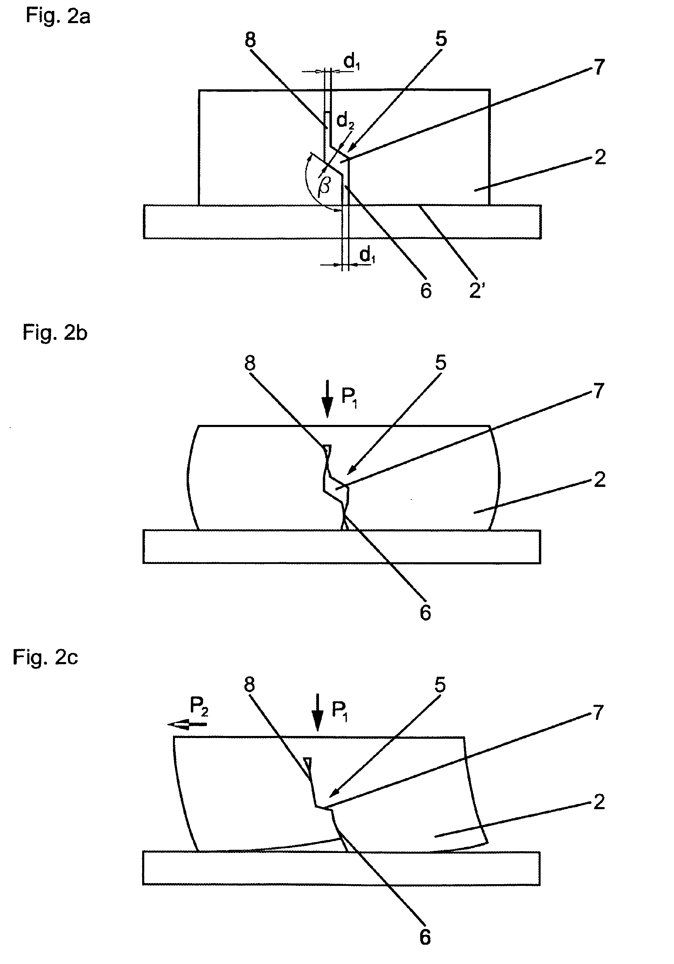

In weiteren Figuren sind der Einfachheit halber großteils Profilblöcke mit nur jeweils einem Einschnitt im radialen Schnitt und parallel zur Umfangsrichtung dargestellt. Eine Ausführungsform der Erfindung wird nun anhand der Fig. 2a bis 2c näher erläutert. Fig. 2a zeigt den unbelasteten Profilblock 2 mit einem Einschnitt 5, welcher sich, beginnend bei der Blockaußenfläche 2', aus drei aufeinander folgenden Abschnitten 6, 7 und 8 zusammensetzt. Die Abschnitte 6 und 8 verlaufen in radialer Richtung und parallel zueinander, sie weisen eine konstante Breite d₁ in der Größenordnung von 0,4 mm bis 0,6 mm auf. Der die Abschnitte 6 und 8 verbindende Abschnitt 7 ist unter einem Neigungswinkel β zur radialen Richtung orientiert, welcher ein stumpfer Winkel von maximal 165° ist. Die Breite d₂ des Abschnittes 7 ist größer als die Breite d₁ der Abschnitte 6 und 8 und zwischen dem Zwei- bis Vierfachen der Breite d₁. Die Abschnitte 6 und 8 weisen ausschließlich eine radiale Richtungskomponente auf, der Abschnitt 7 eine Richtungskomponente in Umfangsrichtung und eine radiale Richtungskomponente.

Fig. 2b zeigt die Verformung des Profilblocks 2 und des Einschnittes 5 unter radialer Last, versinnbildlicht durch den Pfeil P₁ in Fig. 2b. Diese Situation entspricht beispielsweise der Belastung des Blocks 2 bei auf einem Fahrzeug montiertem Reifen und während eines freien Abrollens des Reifens, ohne Brems- und Beschleunigungskräfte. Wie Fig. 2b zeigt, sind die Abschnitte 6 und 8 großteils geschlossen, der Abschnitt 7 ist offen und gegenüber dem unbelasteten Zustand nahezu unverändert. Fig. 2c zeigt den Profilblock 2 und den Einschnitt 5 unter der Wirkung einer hohen Kraft in Richtung des Pfeils P₂. Diese Kraft kann grundsätzlich eine Bremskraft oder eine Bescheunigungskraft sein, je nachdem, in welche Richtung der Abschnitt 7 bezogen auf die Abrollrichtung (Fahrtrichtung) geneigt ist. Im Rahmen der Beschreibung der Ausführungsbeispiele wird angenommen, dass eine Kraft in Richtung des Pfeiles P₂ eine Bremskraft ist. Der Profilblock 2 wird derart verformt, dass sich der Abschnitt 7 des Einschnittes 5 schließt, der Einschnitt 5 kann sich an keiner weiteren Blockverformung mehr beteiligen, der Block 2 wird versteift. Eine gegenseitige Gleitbewegung der Wände der Einschnittabschnitte 6 und 8 in radialer Richtung ist nicht mehr möglich.

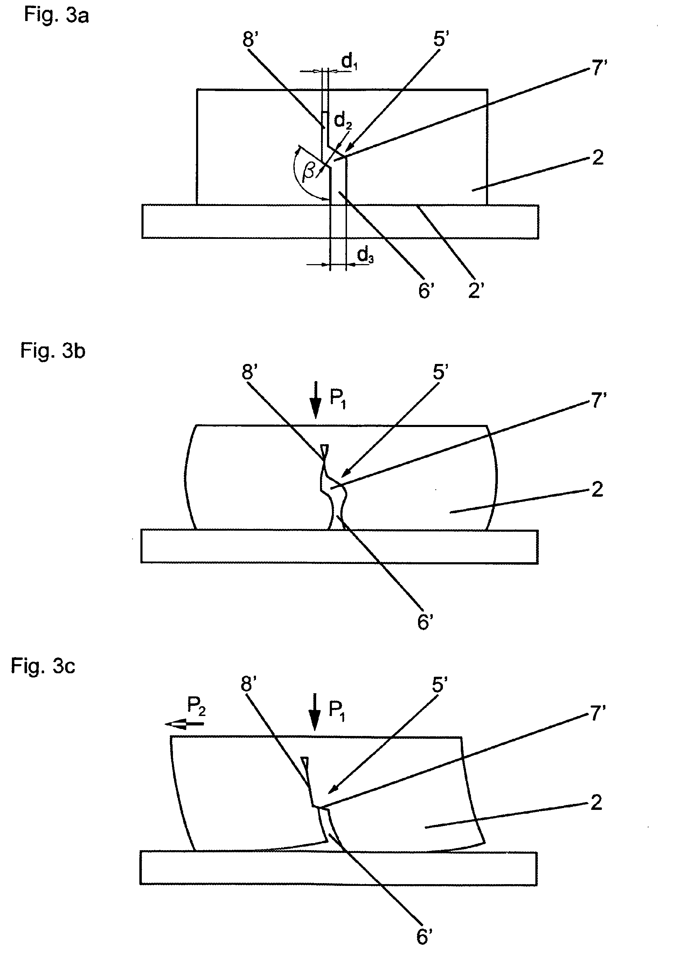

Fig. 3a bis 3c zeigt eine weitere Ausführungsform analog zu den Figuren 2a bis 2c. Der Profilblock 2 ist mit einem Einschnitt 5' versehen, welcher drei Abschnitte 6', 7' und 8' aufweist, wobei der radial äußerste Abschnitt 6' der breiteste Abschnitt ist und eine Breite d₃ aufweist. Der radial innerste Abschnitt 8' und der radial äußerste Abschnitt 6' verlaufen in radialer Richtung und parallel zueinander, der Abschnitt 8'weist die Breite d₁ auf, der Abschnitt 7' die Breite d₂ und ist gegenüber der Radialen unter dem Winkel β geneigt. Die Breite d₃ des Abschnittes 6' ist größer als die Breite d₂ des verbindenden Abschnittes 7'und beträgt bis zum Siebenfachen der Breite d₁ des Abschnittes 8'. Fig. 3b zeigt den Profilblock 2 unter Belastung (Pfeil P₁) und beim freien Abrollen, der radial innerste Abschnitt 8' ist geschlossen, die beiden weiteren Abschnitte 6' und 7' sind offen, der Block 2 kann sich relativ gut verformen. Wirkt eine Bremskraft auf den Block 2 in Richtung des Pfeils P₂ in Fig. 3c, so schließt sich der Abschnitt 7' und verhindert Gleitbewegungen der Einschnittwände der Abschnitte 6' und 8', die Steifigkeit des Profilblocks 2 ist stark erhöht.

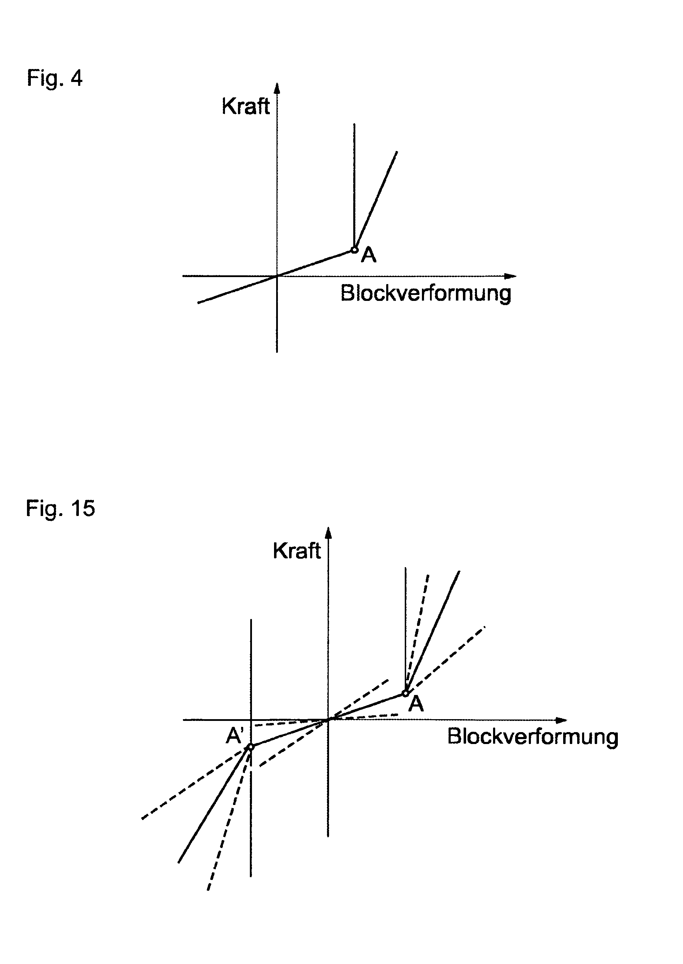

Fig. 4 zeigt ein Diagramm, welches das Steifigkeitsverhalten eines Profilblocks 2 mit einem gemäß Fig. 2a bis 2c bzw. Fig. 3a bis 3c ausgeführten Einschnitt 5 bzw. 5' prinzipiell und daher ohne Skalierung verdeutlicht. Auf der x-Achse ist die Blockverformung in Umfangsrichtung, auf der y-Achse ist eine in Umfangsrichtung (in Richtung P₂) einwirkende Bremskraft aufgetragen. Die im Diagramm eingezeichnete Kurve zeigt, dass bis zu einem Punkt A, welcher mit der Breite und dem Neigungswinkel β des Abschnittes 7, 7' des Einschnittes 5 bzw. 5' korreliert, eine relativ hohe Verformbarkeit des Profilblocks 2 möglich ist. Der Kurvenabschnitt bis zum Punkt A entspricht demnach dem Bereich des freien Abrollens. Wirkt eine Bremskraft auf den Profilblock 2, schließt sich der Einschnitt 5, 5' im Bereich des Abschnittes 7, 7' und der Profilblock 2 weist eine hohe Steifigkeit auf, versinnbildlicht durch den steilen Anstieg des an den Punkt A anschließenden Kurvenabschnittes.

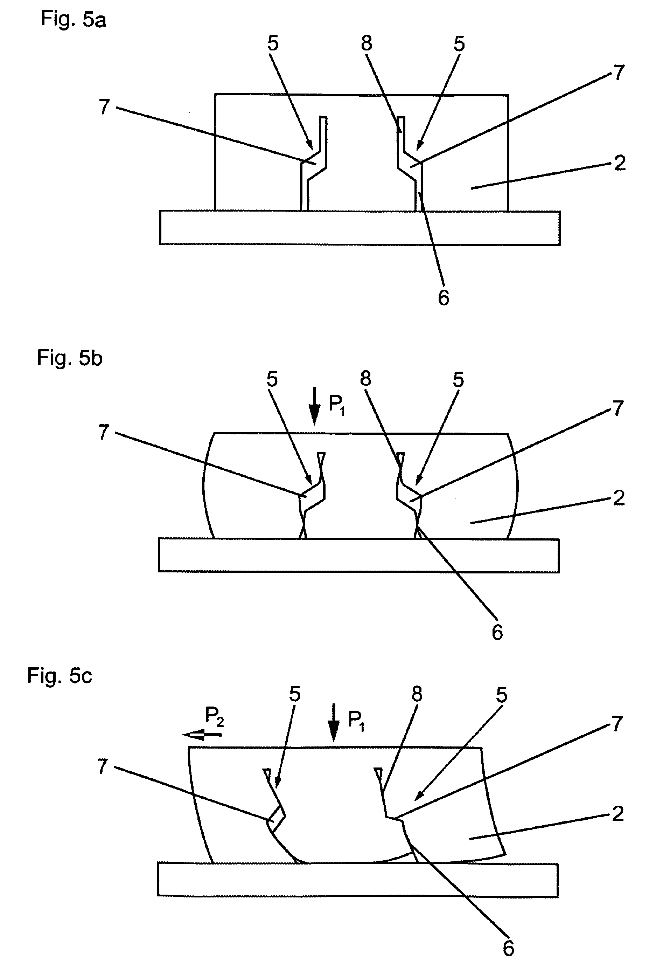

Fig. 5a bis 5c zeigen eines Ausführungsvariante, bei welcher innerhalb eines Profilblocks 2 zwei Einschnitte 5 angeordnet sind, welche bezüglich einer zwischen ihnen in radialer Richtung verlaufenden axial orientierten Ebene spiegelbildlich angeordnet sind. Jeder Einschnitt 5 weist daher, von der Blockoberfläche aus betrachtet, einen in radialer Richtung verlaufenden Abschnitt 6 auf, an welchen ein geneigter Abschnitt 7 anschließt, an welchen ein in radialer Richtung verlaufender Abschnitt 8 anschließt. Die Abschnitte 7 in den beiden Einschnitten 5 verlaufen derart, dass der gegenseitige Abstand der beiden Abschnitte 6 größer ist als der gegenseitige Abstand der Abschnitte 8. Von solcher Art paarweise angeordneten Einschnitten 5 wirkt der eine Einschnitt 5 bei einem Bremsvorgang versteifend, der andere Einschnitt bei Traktion bzw. beim Beschleunigen. Fig. 5b zeigt den Profilblock 2 unter Belastung (Pfeil P₁) beim freien Abrollen. Die Abschnitte 7 sind offen, unter der Wirkung der Kraft in Richtung des Pfeils P₁ haben sich die Abschnitte 6 und 8 großteils geschlossen. Fig. 5c zeigt die Verhältnisse bei einer zusätzlich in Richtung des Pfeils P₂ wirkenden Bremskraft. Der Abschnitt 7 des in dieser Figur rechten Einschnittes 5 hat sich geschlossen und wirkt versteifend auf den Block 2, der Abschnitt 7 des in dieser Figur linken Einschnittes 5 ist offen. Würde der Profilblock 2 durch starke Beschleunigung in die dem Pfeil P₂ entgegengesetzte Richtung belastet, würde sich der Abschnitt 7 im linken Einschnitt 5 komplett schließen, der Abschnitt 7 im rechten Einschnitt 5 würde offen bleiben.

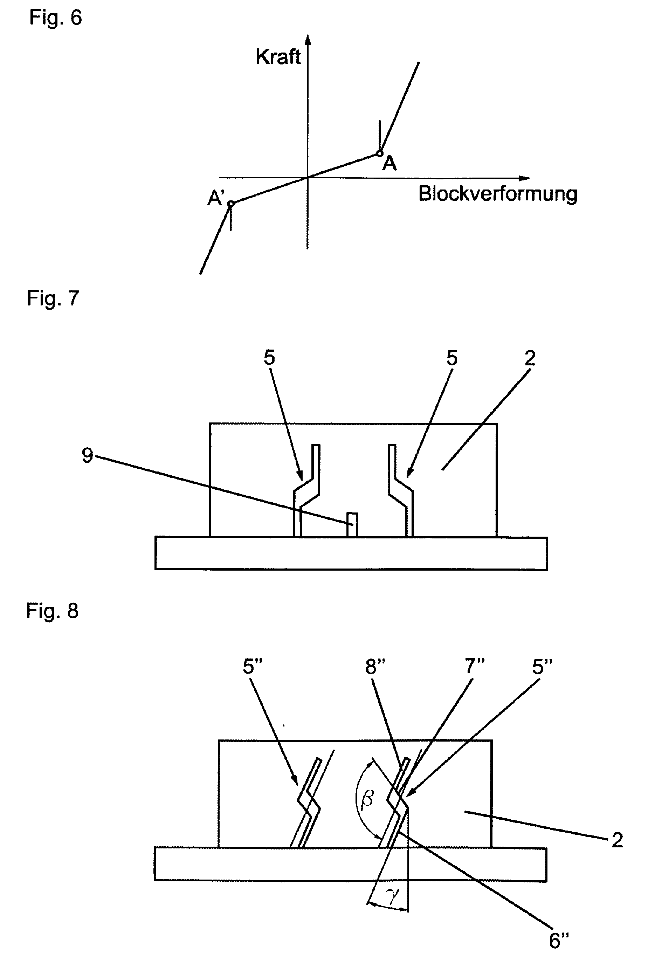

Fig. 6 zeigt ein Diagramm, welches das Verformungsverhalten des Blockes 2 gemäß der Ausführungsform nach Fig. 5a bis 5c wiedergibt. Die Punkte A und A' sind am Ende jener Kurvenabschnitte, die die Verhältnisse beim freien Abrollen bzw. bei geringen Kräften wiedergeben. Der Kurvenabschnitt jenseits des Punktes A zeigt die Verhältnisse beim Bremsen mit einem Schließen des Abschnittes 7 des in Fig. 5a bis 5c rechten Einschnittes 5. Der im Punkt A' anschließende Kurvenabschnitt zeigt die Blockversteifung beim Beschleunigen.

Die paarweise Anordnung von Einschnitten 5 in Profilblöcke 2 kann auch derart erfolgen, dass der gegenseitige Abstand ihrer Abschnitte 6 kleiner ist als der gegenseitige Abstand ihrer Abschnitte 8.

Fig. 7 zeigt einen Block 2 mit paarweise angeordneten Einschnitten 5 gemäß Fig. 5a, wobei mittig zwischen den Einschnitten 5 ein kurzer, etwa in der Länge des Abschnittes 6 ausgeführter in radialer Richtung verlaufender Zusatzeinschnitt 9 vorgesehen ist. Der Einschnitt 9 weist eine Breite auf, die zumindest dem Zweifachen der Breite des Abschnittes 6 entspricht, und verläuft in axialer Richtung parallel zu und über die Erstreckung der Einschnitte 5. Der Einschnitt 9 unterstützt bei der Vulkanisation eines Reifens mit diesem Profilblock im Laufstreifen das Entformen der paarweise gebildeten Einschnitte 5. Wie bekannt, werden die Einschnitte 5 durch Lamellenbleche, die als Negative der Einschnitte 5 geformt sind, hergestellt, indem die Lamellenbleche beim Einformen des Reifens in die Vulkanisationsform in den noch rohen Laufstreifengummi eindringen. Nach der Vulkanisation sollen die Lamellenbleche ohne Risse im vulkanisierten Laufstreifen zu verursachen aus dem fertigen Reifen entfernt werden können. Die durch kurze Lamellenbleche gebildeten Zusatzeinschnitte 9 gestatten nun den Profilblockteilen zwischen den Einschnitten 5 eine zusätzliche Beweglichkeit, die das Entformen erleichtert.

Fig. 8 zeigt eine weitere Ausführungsvariante eines Profilblocks 2 mit zwei Einschnitten 5". Die beiden zueinander parallel verlaufenden Einschnitte 5" sind ähnlich zu jenen gemäß Fig. 2a bis 2c mit Abschnitten 6", 7" und 8" versehen, jedoch insgesamt gegenüber der radialen Richtung geneigt bzw. gekippt angeordnet, wobei der Neigungswinkel γ bis zu 30° beträgt. Die beiden, parallel zueinander verlaufenden Abschnitte 6" und 8"verlaufen somit unter dem Winkel γ zur radialen Richtung geneigt, der Abschnitt 7" ist unter dem Winkel β, welcher ein stumpfer Winkel von bis zu 165° ist, zur radialen Richtung geneigt. Eine analoge Anordnung ist auch für Einschnitte möglich, die gemäß Fig. 3a ausgeführt sind.

Durch die gegenüber der radialen Richtung geneigte Anordnung der Einschnitte 5" kann eine Vergleichmäßigung des Bodenaufstandsdruckes des Profilblocks 2 und eine bessere Wirkung der Einschnitte 5" sowie eine Erhöhung der Steifigkeit bei Brems-und Beschleunigungsmanövern erreicht werden.

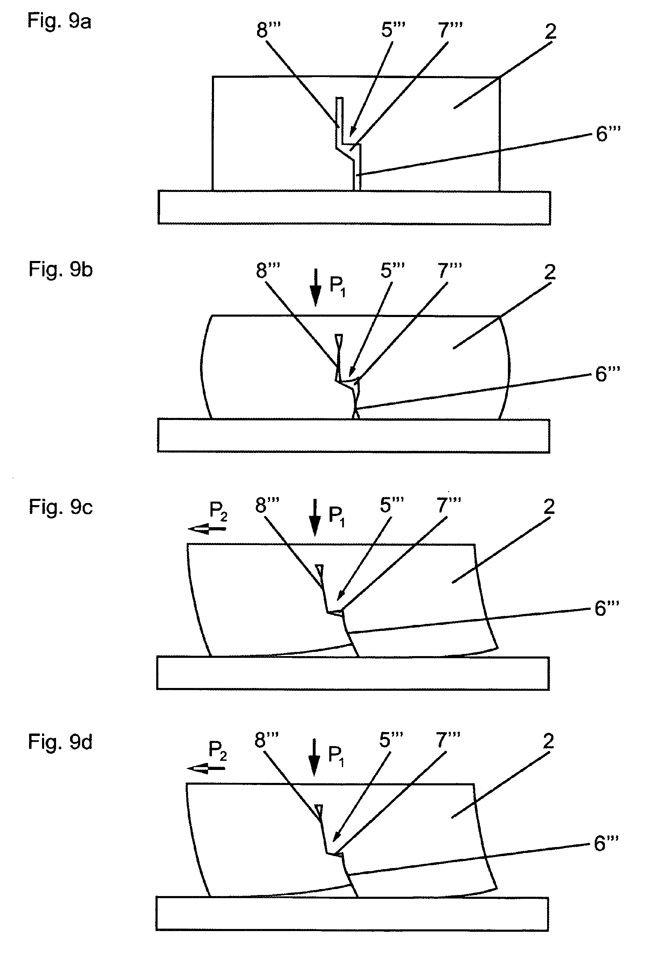

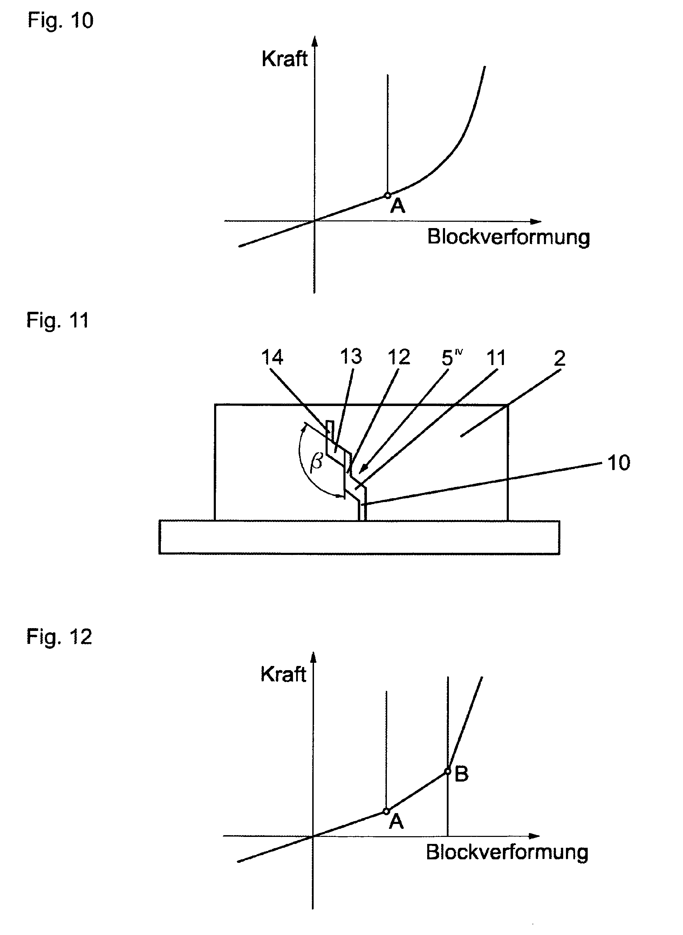

Fig. 9a bis 9d zeigt eine weitere Ausfiihrungsform der Erfindung anhand eines Profilblocks 2 mit einem einzigen Einschnitt 5"', welcher aus drei Abschnitten 6"', 7"' und 8"' besteht. Die Einschnittabschnitte 6'" und 8'" verlaufen in radialer Richtung, weisen eine konstante Breite d₁, wie oben definiert, auf und sind über einen Abschnitt 7"' miteinander verbunden, dessen Breite sich vom Abschnitt 8"' in Richtung Abschnitt 6'" kontinuierlich vergrößert. Fig. 9b zeigt die Verformung des Profilblocks 2 unter Belastung in radialer Richtung (Pfeil P₁). Die Einschnittabschnitte 6'" und 8"' sind großteils geschlossen, der Einschnittabschnitt 7"' bleibt offen. Wirkt nun eine zunehmende Bremskraft auf den Profilblock 2, wie es in Fig. 9c und 9d durch den Pfeil P₂ angedeutet ist, so kann sich der Profilblock 2, wie gezeigt, solange verformen, bis der Abschnitt 7'" über seine Länge nahezu geschlossen ist. Fig. 10 gibt in einem Diagramm die Blockverformung mit zunehmender Bremskraft wieder. Jenseits des Punktes A erfolgt eine kontinuierliche Zunahme der Blocksteifigkeit mit zunehmenden Bremskräften.

Fig. 11 zeigt eine Ausführungsvariante eines Profilblocks 2 mit einem Einschnitt 5^{IV}, welcher aus fünf Abschnitten 10 bis 14 zusammengesetzt ist. Die Abschnitte 10, 12 und 14 verlaufen in radialer Richtung und parallel zueinander und weisen die konstante Breite d₁ auf. Die Verbindung zwischen den Abschnitten 10, 12 und 14 erfolgt durch unter dem Winkel β geneigte breitere Abschnitte 11 und 13 mit der Breite d₂. Das Diagramm in Fig. 12 gibt die Blockverformung des Profilblocks 2 beim Wirken einer Bremskraft wieder. Der Kurvenabschnitt bis zum Punkt A zeigt den Bereich des freien Abrollens, zwischen den Punkten A und B vergrößert sich die Steifigkeit moderat, ab einer B übersteigenden Bremskraft erfolgt ein steiler Anstieg der Steifigkeit des Profilblocks 2, dies entspricht jener Situation, in welcher beide Abschnitte 11 und 13 weitgehend geschlossen sind und sich ihre Einschnittwände aneinander abstützen.

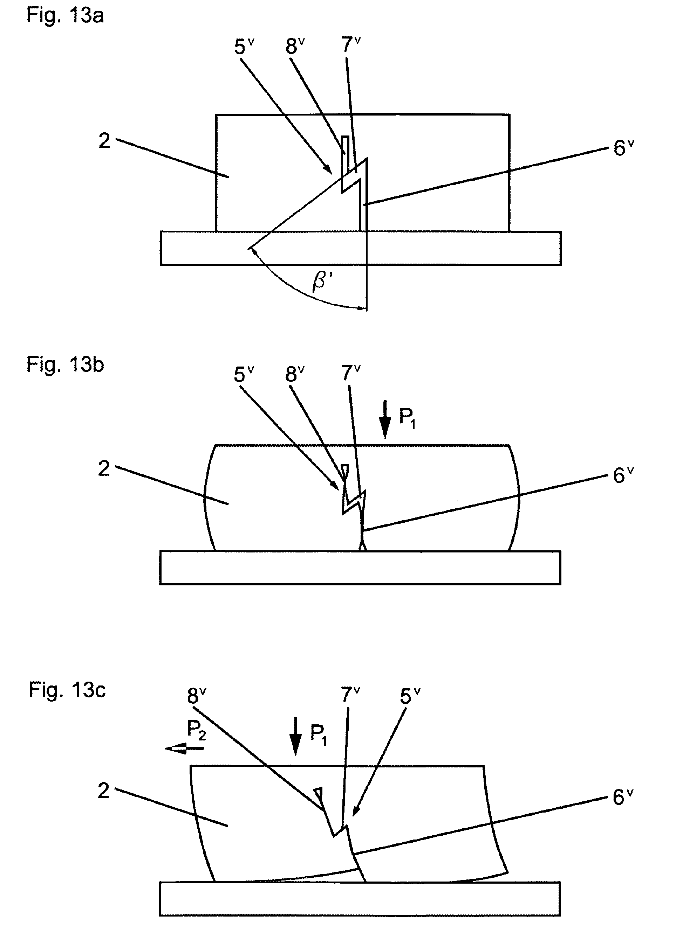

Fig. 13a bis 13c zeigen eine Ausführungsvariante eines Einschnittes 5^{V} aus drei Abschnitten 6^{V}, 7^{V} und 8^{V}, wobei die Abschnitte 6^{V} und 8^{V} in radialer Richtung verlaufen und die Breite d₁ aufweisen. Der die beiden Abschnitte 6^{V} und 8^{V} verbindende Abschnitt 7^{V} ist unter einem spitzen Winkel β', welcher mindestens 30° beträgt, zur radialen Richtung geneigt und weist die Breite d₂ auf. Fig. 13b zeigt die Verformung des Profilblocks 2 bei radialer Belastung (Pfeil P₁) mit teilweise geschlossenen Abschnitten 6^{V} und 8^{V}. Fig. 13c zeigt den Profilblock 2 unter dem Einwirken einer Bremskraft in Richtung des Pfeils P₂, wobei der Abschnitt 7^{V} geschlossen ist. Der Einschnitt 5^{V} wirkt besonders stark versteifend.

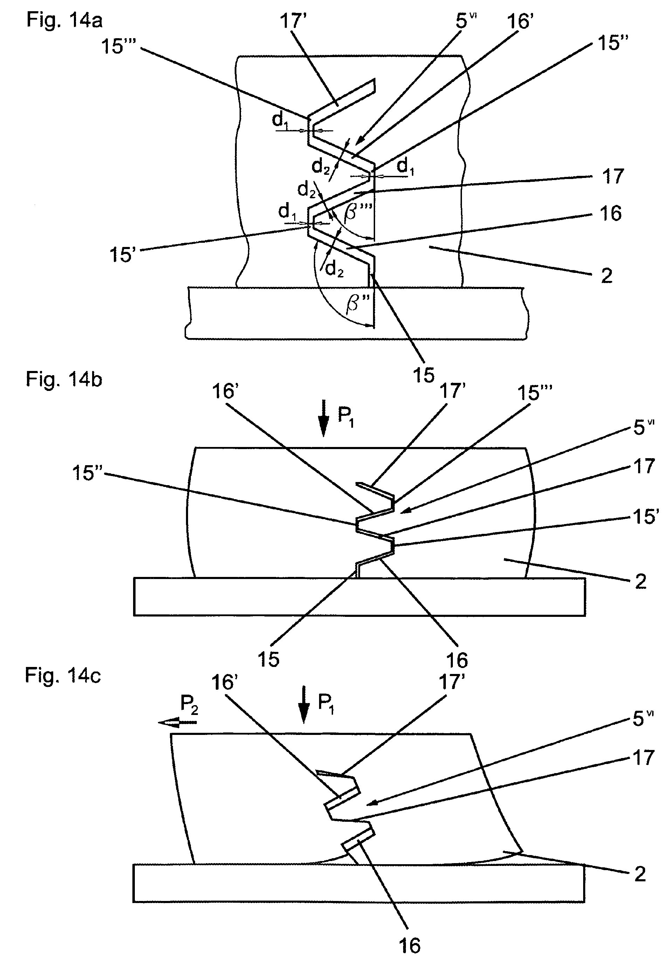

Bei der in Fig. 14a bis 14c gezeigten Ausführungsvariante ist ein Profilblock 2 mit einem Einschnitt 5^{VI} dargestellt, welcher aus vier kurzen, in radialer Richtung verlaufenen Abschnitten 15, 15',15", 15"' sowie aus diese miteinander verbindenden bzw. an diese anschließenden geneigten Abschnitten 16, 16' und 17, 17' besteht. Die Abschnitte 15, 15', 15" und 15"' weisen die Breite d₁ wie oben definiert, die Abschnitte 16, 16', 17, und 17' weisen die Breite d₂, wie oben definiert, auf. Durch die gegenseitige Anordnung der Abschnitte 15, 15', 15", 15'", 16, 17, 16', 17' entsteht eine Art Zick-Zack-Verlauf des Einschnittes 5^{VI} in radialer Richtung. Bei der gezeigten Ausführung sind die in der Reihenfolge 16, 17, 16' und 17' aufeinander folgenden Abschnitte derart angeordnet, dass die Abschnitte 16, 16' sowie 17, 17' jeweils parallel zueinander verlaufen, wobei die Abschnitte 16, 16' mit der radialen Richtung einen Winkel β" und die Abschnitte 17, 17' mit der radialen Richtung einen Winkel β"' einschließen. Der Winkel β" beträgt zwischen 90° und 165°, der Winkel β'" zwischen 15° und 90°.

Die Verformung des Profilblocks 2 bzw. des Einschnittes 5^{V} unter radialer Belastung (Pfeil P₁) zeigt Fig. 14b. Die Abschnitte 15, 15' , 15" und 15'" schließen sich, die Einschnittwände können sich dennoch in radialer Richtung gegeneinander bewegen. Beim Wirken einer Bremskraft in Richtung des Pfeils P₂ in Fig. 14c schließen sich die Abschnitte 17, 17' und die Steifigkeit des Profilblocks 2 erhöht sich entsprechend. Würde eine Traktionskraft entgegengesetzt zum Pfeil P₂ in Fig. 14c wirken, würden sich die Abschnitte 16 und 16' schließen und eine Steifigkeitserhöhung des Profilblocks 2 bewirken.

Fig. 15 gibt die Verformung des Profilblocks 2 unter der Wirkung von Brems- und Beschleunigungskräften in einem Diagramm wieder, welches analog zu den anderen Diagrammen ausgeführt ist. Die Punkte A und A' begrenzen jene Bereiche, in welchen ein "freies" Abrollen erfolgt. Sobald die wirkenden Kräfte derart hoch werden, dass sich die Einschnittabschnitte 16, 16' bzw. 17, 17' schließen, wird die Steifigkeit des Profilblocks 2 stark erhöht.

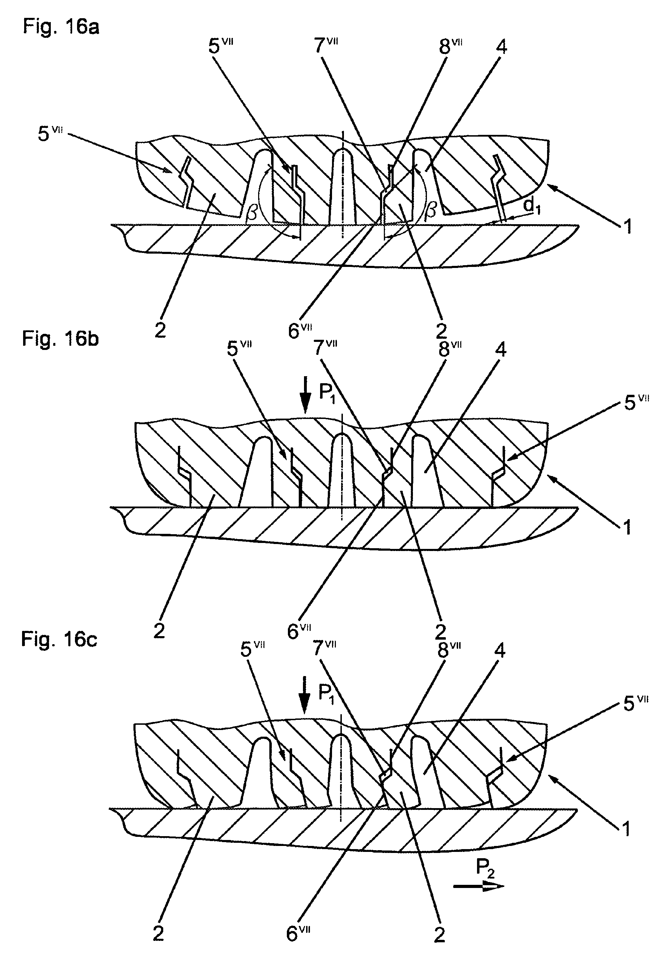

Fig. 16a, 16b und 16c zeigen jeweils einen Querschnitt durch den Laufstreifenbereich eines Reifens mit drei Umfangsnuten 4, welche eine Gliederung des Laufstreifens 1 in vier in Umfangsrichtung umlaufende Profilelemente, beispielsweise Profilblockreihen, bewirken. Gezeigt sind beispielsweise Querschnitte durch Profilblöcke 2 innerhalb der Blockreihen. Bei der dargestellten Ausführungsform ist in jedem Profilblock 2 ein in Umfangsrichtung verlaufender, den betreffenden Profilblock beispielsweise komplett durchquerender Einschnitt 5^{VII} vorgesehen. Die Einschnitte 5^{VII} weisen drei Abschnitte 6^{VII}, 7^{VII},8^{VII} auf, wobei die Abschnitte 6^{VII} und 8^{VII} in radialer Richtung und parallel zueinander verlaufen und die konstante Breite d₁aufweisen. Der die Abschnitte 6^{VII} und 8^{VII} verbindende Abschnitt 7^{VII} ist jeweils unter dem Neigungswinkel β zur radialen Richtung orientiert. Die Breite d₂ des Abschnittes 7^{VII} ist größer als die Breite d₁ und beträgt insbesondere zwischen dem 2- bis 4-Fachen der Breite d₁, wie bereits beschrieben. Die Abschnitte 6^{VII} und 8^{VII} weisen ausschließlich eine radiale Richtungskomponente auf, der Abschnitt 7^{VII} in sämtlichen Einschnitten 5^{VII} eine Richtungskomponente in axialer Richtung und eine in radialer Richtung. Dabei sind die Abschnitte 7^{VII}, die in den Einschnitten 5^{VII} in der rechten Laufstreifenhälfte vorgesehen sind, zu den Abschnitten 7^{VII} jener Einschnitte 5^{VII}, die in der linken Laufstreifenhälfte vorgesehen sind gegensinnig geneigt. Die Neigung der Abschnitte 7^{VII} in der rechten Laufstreifenhälfte ist derart, dass diese Abschnitte 7^{VII} unter dem Winkel β vom jeweiligen Abschnitt 6^{VII} in Richtung rechter Reifenschulter weisend verlaufen, die Abschnitte 7^{VII} in der linken Laufstreifenhälfte in Richtung linker Reifenschulter. Fig. 16b zeigt die Verformung der Profilblöcke 2 und der Einschnitte 5^{VII} unter radialer Last, versinnbildlicht durch den Pfeil P₁ in Fig. 16b. Analog zu den vorhergehenden Ausführungsbeispielen entspricht diese Situation beispielsweise der Belastung des Laufstreifens bei auf einem am Fahrzeug montierten Reifen und während des freien Abrollens des Reifens. Die Abschnitte 6^{VII} und 7^{VII} der Einschnitte 5^{VII} sind großteils geschlossen, die Abschnitte 7^{VII} sind nach wie vor offen. Fig. 16c zeigt die Profilblöcke 2 und die Einschnitte 5^{VII} unter der Wirkung einer vergleichsweise hohen Seitenkraft in Richtung des Pfeils P₂, wie sie beispielsweise bei einer Kurvenfahrt auftreten könnte. Bei den in der linken Laufstreifenhälfte befindlichen Einschnitten 5^{VII} bewirkt die Querkraft ein Schließen der Abschnitte 7^{VII}, diese Einschnitte 5^{VII} können sich an einer weiteren Blockverformung nicht mehr beteiligen, die betreffenden Profilblöcke 2 werden versteift. Würde eine Seitenkraft entgegengesetzt zum Pfeil P₂ wirken, dann würden sich die Abschnitte 7^{VII} in den Einschnitten 5^{VII} in der rechten Laufstreifenhälfte analog schließen und eine Versteifung der betreffenden Profilblöcke 2 bewirken.

Erfindungsgemäß ausgeführte Einschnitte können je nach den gestellten Anforderungen und je nach dem Typ des Fahrzeugluftreifens in unterschiedlichen Laufstreifenbereichen als einzelne Einschnitte, paarweise oder in einer Vielzahl vorgesehen sein und derart angeordnet sein, dass sie eine Blockversteifung beim Bremsen und/oder beim Beschleunigen und/oder beim Wirken von Seitenkräften bewirken. Bei ein und demselben Reifen können Einschnitte unterschiedlicher Ausführungen, auch in Kombination mit üblichen Einschnitten, vorgesehen sein.

**Bezugsziffernliste**
- 1: Laufstreifen
- 2: Profilblöcke
- 2': Blockaußenfläche
- 3: Quernuten
- 4: Umfangsnuten
- 5: Einschnitt
- 5': Einschnitt
- 5": Einschnitt
- 5"': Einschnitt
- 5^{IV}: Einschnitt
- 5^{V}: Einschnitt
- 5^{VI}: Einschnitt
- 5^{VII}: Einschnitt
- 6, 7, 8: Abschnitte
- 6', 7', 8': Abschnitte
- 6", 7", 8": Abschnitte
- 6"', 7"', 8"': Abschnitte
- 6^{V} ,7^{V}, 8^{V}: Abschnitte
- 6^{VII}, 7^{VII}, 8^{VII}: Abschnitte
- 9: Zusatzeinschnitt
- 10 bis 14: Abschnitte
- 15 bis 15"': Abschnitte

- 16, 16': Abschnitte
- 17, 17': Abschnitte
- A, A',B: Punkte
- α, α': Winkel
- β, β', β": Winkel
- d₁, d₂,. d₃: Breiten
- P₁, P₂, P₃: Pfeile

## Patentansprüche

1. Fahrzeugluftreifen mit einem profilierten Laufstreifen mit Profilelementen (2), die mit zumindest einem Einschnitt (5, 5', 5", 5"', 5^{IV}, 5^{V}, 5^{VI}) versehen sind, welcher, im Radialschnitt und quer zu seiner Erstreckungsrichtung betrachtet, aus mindestens drei Abschnitten (6, 7, 8; 6', 7', 8'; 6", 7", 8"; 6"', 7'", 8'"; 6"", 7^{VII}, 8^{VII}; 10 bis 14; 6^{V}, 7^{V}, 8^{V}; 15 bis 15"'; 16, 16', 17, 17'), die in einer Art Zick-Zack-Form aneinander anschließen, bestehen, wobei, von der Profiloberfläche (2') aus betrachtet, der erste und der dritte Abschnitt (6, 7; 6', 8'; 6", 8"; 6"', 8"'; 6 ^{VII} 8^{VII}; 10, 12; 6^{V}, 8^{V}; 15_{,} 15') eine größere radiale Richtungskomponente aufweisen, als der diese Abschnitte (6, 7; 6', 8'; 6", 8"; 6"', 8"'; 6^{VII}, 8^{VII}; 10, 12; 6^{V}, 8^{V}; 15, 15') verbindende zweite Abschnitt (7, 7', 7", 7"', 11, 7^{V}, 7^{VII}, 16), **dadurch gekennzeichnet,**
**dass** der erste Abschnitt (6, 6', 6", 6"', 10, 6^{V}, 15, 6^{VII}) eine konstante Breite aufweist, und dass der zweite Abschnitt (7, 7', 7", 7"', 11, 7^{V}, 7^{VII}, 16) des Einschnittes (5, 5', 5", 5"', 5^{IV}, 5^{V}, 5^{VI}, 5^{VII}) breiter ausgeführt ist als der dritte Abschnitt (6, 7; 6', 8'; 6", 8"; 6"', 8"'; 10, 12; 6^{V}, 8^{V}; 6^{VII}, 8^{VII}; 15_{,} 15') des Einschnittes (5, 5', 5", 5"', 5^{IV}, 5^{V}, 5^{VI}, 5^{VII}).

2. Fahrzeugluftreifen nach Anspruch 1, **dadurch gekennzeichnet, dass** der Laufstreifen Profilelemente (2) mit jeweils zumindest einem Einschnitt (5, 5', 5", 5'", 5^{IV}, 5^{V}, 5^{VI}) aufweist, welcher sich im Wesentlichen in axialer Richtung beziehungsweise mehr in axialer Richtung als in Umfangrichtung erstreckt.

3. Fahrzeugluftreifen nach Anspruch 1, **dadurch gekennzeichnet, dass** der Laufstreifen Profilelemente (2) mit jeweils zumindest einem Einschnitt (5^{VII}) aufweist, welcher sich im Wesentlichen in Umfangsrichtung beziehungsweise mehr in Umfangsrichtung als in axialer Richtung erstreckt.

4. Fahrzeugluftreifen nach einem der Ansprüche 1 bis 3, **dadurch gekennzeichnet, dass** der Einschnitt (5, 5', 5", 5'", 5^{V}, 5^{VII}) aus drei Abschnitten (6 7, 8; 6', 7', 8'; 6" 7", 8"; 6'", 7'", 8'"; 6^{V}, 7^{V}, 8^{V}; 6^{VII}, 7^{VII}, 8^{VII}) besteht.

5. Fahrzeugluftreifen nach einem der Ansprüche 1 bis 4, **dadurch gekennzeichnet, dass** der erste und der dritte Abschnitt (6, 7; 6', 8'; 6", 8"; 6"', 8"'; 10, 12; 6^{V}, 8^{V}; 6^{VII}, 8^{VII}; 15, 15') zueinander parallel verlaufen.

6. Fahrzeugluftreifen nach einem der Ansprüche 1 bis 5, **dadurch gekennzeichnet, dass** der erste und der dritte Abschnitt (6, 7; 6', 8'; 6", 8"; 6"', 8"'; 10, 12; 6^{V}, 8^{V}; 6^{VII}, 8^{VII}; 15, 15') zumindest im Wesentlichen in radialer Richtung verlaufen.

7. Fahrzeugluftreifen nach einem der Ansprüche 1 bis 5, **dadurch gekennzeichnet, dass** der erste und der dritte Abschnitt (6", 8") unter einem spitzen Winkel (γ) von bis zu 30° zur radialen Richtung verlaufen.

8. Fahrzeugluftreifen nach einem der Ansprüche 1 bis 7, **dadurch gekennzeichnet, dass** der zweite Abschnitt (7, 7', 7", 7^{VII}, 11) unter einem stumpfen Winkel (β), welcher bis zu 165° beträgt, zur radialen Richtung verläuft.

9. Fahrzeugluftreifen nach einem der Ansprüche 1 bis 7, **dadurch gekennzeichnet, dass** der zweite Abschnitt (7^{V}) unter einem spitzen Winkel (β'), welcher mindestens 30° beträgt, zur radialen Richtung verläuft.

10. Fahrzeugluftreifen nach einem der Ansprüche 1 bis 9, **dadurch gekennzeichnet, dass** der zweite Abschnitt (7, 7', 7", 11, 7^{V}, 7^{VII}) eine konstante Breite (d₂) aufweist, die das Zwei- bis Vierfache der Breite des dritten Abschnittes (8, 8', 8", 12, 8^{V}, 8^{VII}) beträgt.

11. Fahrzeugluftreifen nach einem der Ansprüche 1 bis 9, **dadurch gekennzeichnet, dass** der zweite Abschnitt (7"') eine Breite aufweist, die zwischen dem dritten und dem ersten Abschnitt (8"', 6"') kontinuierlich größer wird.

12. Fahrzeugluftreifen nach einem der Ansprüche 1 bis 11, **dadurch gekennzeichnet, dass** an den dritten Abschnitt (12) zwei weitere, analog zum zweiten und zum dritten Abschnitt (11, 12) ausgeführte und verlaufende Abschnitte (13, 14) anschließen.

13. Fahrzeugluftreifen nach einem der Ansprüche 1 bis 11, **dadurch gekennzeichnet, dass** der erste Abschnitt (6') breiter ist als der zweite Abschnitt (7').

14. Fahrzeugluftreifen nach einem der Ansprüche 1 bis 13, **dadurch gekennzeichnet, dass** an den dritten Abschnitt (15') fünf weitere Abschnitte (17, 15", 16', 15"', 17') anschließen, wobei der Sechste parallel zum Zweiten und der Siebente parallel zum Vierten verlaufen, wobei diese Abschnitte (16, 17, 16', 17') abwechselnd einen Winkel (β"), welcher zwischen 90° und 165° beträgt, und einen Winkel (β'"), welcher zwischen 15° und 90° beträgt, mit der radialen Richtung einschließen und derart einen Zick-Zack-Verlauf des Einschnittes (5^{VI}) ergeben.

15. Fahrzeugluftreifen nach Anspruch 14, **dadurch gekennzeichnet, dass** der erste und jeder zweite Abschnitt (15, 15', 15", 15"') zumindest im Wesentlichen in radialer Richtung verlaufen und eine Breite (d₁) aufweisen, die zwischen 0,4 mm und 0,6 mm beträgt.

16. Fahrzeugluftreifen nach Anspruch 14 oder 15, **dadurch gekennzeichnet, dass** die an die im Wesentlichen in radialer Richtung verlaufenden Abschnitte (15, 15', 15", 15"') anschließenden Abschnitte (16, 16', 16", 16"') eine Breite aufweisen, die das Zwei- bis Vierfache der Breite der in radialer Richtung verlaufender Abschnitte (15, 15', 15", 15"') beträgt.

17. Fahrzeugluftreifen nach einem der Ansprüchen 1 bis 16, **dadurch gekennzeichnet, dass** im Laufstreifen ( 1 ) Profilelemente (2) mit jeweils zumindest zwei Einschnitten (5) mit einer bezüglich der Radialen zueinander entgegen gerichteten Neigung der zweiten Abschnitte (7) vorgesehen sind.

18. Fahrzeugluftreifen nach einem der Ansprüche 1 bis 16, **dadurch gekennzeichnet, dass** im Laufstreifen zumindest ein Profilelement vorgesehen ist, welches zumindest einen Einschnitt (5^{VII}) aufweist, dessen zweiter Abschnitt (7^{VII}) gegenüber der Radialen in eine bestimmte Richtung geneigt ist, und dass im Laufstreifen zumindest ein anderes Profilelement vorgesehen ist, welches zumindest einen Einschnitt (5^{VII}) aufweist, dessen zweiter Abschnitt (7^{VII}) gegensinnig zum zweiten Abschnitt (7^{VII}) des Einschnittes (5^{VII}) im erstgenannten Profilelement (2) geneigt ist.

## Claims

1. Pneumatic tyre for a vehicle, having a profiled tread with profiled elements (2) which are provided with at least one indent (5, 5', 5", 5"', 5^{IV}, 5^{V}, 5^{VI}) which, considered in the radial section and transverse with respect to its direction of extent, is composed of at least three sections (6, 7, 8; 6', 7', 8'; 6", 7", 8''; 6"', 7"', 8'''; 6^{VII}, 7^{VII}, 8^{VII}; 10 to 14; 6^{V}, 7^{V}, 8^{V}; 15 to 15"'; 16, 16', 17, 17' ) which adjoin one another in a type of zig-zag shape, wherein, considered from the profile surface (2'), the first and the third sections (6, 7; 6', 8'; 6", 8''; 6'", 8'''; 6^{VII}, 8^{VII}; 10, 12; 6^{V}, 8^{V}; 15, 15') have a greater radial direction component than the second section (7, 7', 7", 7"'. 11, 7^{V}, 7^{VII}, 16), which connects these sections (6, 7; 6', 8'; 6", 8''; 6"', 8'''; 6^{VII}, 8^{VII}; 10, 12; 6^{V}, 8^{V}; 15, 15'),
**characterized**
**in that** the first section (6, 6', 6", 6"', 10, 6^{V}, 15, 6^{VII}) has a constant width, and in that the second section (7, 7', 7", 7"', 11, 7^{V}, 7^{VII}, 16) of the indent (5, 5', 5", 5"', 5^{IV}, 5^{V}, 5^{VI}, 5^{VII}) is made wider than the third section (6, 7; 6', 8'; 6", 8''; 6''', 8'''; 10, 12; 6^{V}, 8^{V}; 6^{VII}, 8^{VII}; 15, 15') of the indent (5, 5', 5", 5"', 5^{IV}, 5^{V}, 5^{VI}, 5^{VII})_{.}

2. Pneumatic tyre for a vehicle according to Claim 1, **characterized in that** the tread has profiled elements (2) each with at least one indent (5, 5', 5", 5"', 5^{IV}, 5^{V}, 5^{VI}) which extends essentially in the axial direction or more in the axial direction than in the circumferential direction.

3. Pneumatic tyre for a vehicle according to Claim 1, **characterized in that** the tread has profiled elements (2) each with at least one indent (5^{VII}) which extends essentially in the circumferential direction or more in the circumferential direction than in the axial direction.

4. Pneumatic tyre for a vehicle according to one of Claims 1 to 3, **characterized in that** the indent (5, 5', 5", 5"', 5^{V}, 5^{VII}) is composed of three sections (6, 7, 8; 6', 7', 8'; 6", 7", 8"; 6"', 7'"_{,} 8"'; 6^{V}, 7^{V}, 8^{V}; 6^{VII}, 7^{VII}, 8^{VII}).

5. Pneumatic tyre for a vehicle according to one of Claims 1 to 4, **characterized in that** the first and the third sections (6, 7; 6', 8'; 6", 8"; 6"', 8"'; 10, 12; 6^{V}, 8^{V}; 6^{VII}, 8^{VII}; 15, 15') run parallel to one another.

6. Pneumatic tyre for a vehicle according to one of Claims 1 to 5, **characterized in that** the first and the third sections (6, 7; 6', 8'; 6" , 8" ; 6"', 8"'; 10, 12; 6^{V}, 8^{V}; 6^{VII}, 8^{VII}; 15, 15') run at least essentially in the radial direction.

7. Pneumatic tyre for a vehicle according to one of Claims 1 to 5, **characterized in that** the first and third sections (6", 8") run at an acute angle (γ) of up to 30° with respect to the radial direction.

8. Pneumatic tyre for a vehicle according to one of Claims 1 to 7, **characterized in that** the second section (7, 7', 7", 7^{VII}, 11) runs at an obtuse angle (β), which is up to 165°, with respect to the radial direction.

9. Pneumatic tyre for a vehicle according to one of Claims 1 to 7, **characterized in that** the second section (7^{V}) runs at an acute angle (β'), which is at least 30°, with respect to the radial direction.

10. Pneumatic tyre for a vehicle according to one of Claims 1 to 9, **characterized in that** the second section (7, 7', 7" , 11, 7^{V}, 7^{VII}) has a constant width (d₂) which is two to four times the width of the third section (8, 8' , 8", 12, 8^{V}, 8^{VII}).

11. Pneumatic tyre for a vehicle according to one of Claims 1 to 9, **characterized in that** the second section (7"') has a width which becomes continuously larger between the third and the first sections (8"', 6"').

12. Pneumatic tyre for a vehicle according to one of Claims 1 to 11, **characterized in that** two further sections (13, 14) which are embodied and run in a way analogous with the second and third sections (11, 12) adjoin the third section (12).

13. Pneumatic tyre for a vehicle according to one of Claims 1 to 11, **characterized in that** the first section (6') is wider than the second section (7').

14. Pneumatic tyre for a vehicle according to one of Claims 1 to 13, **characterized in that** five further sections (17, 15", 16' , 15"', 17') adjoin the third section (15'), wherein the sixth section runs parallel to the second section and the seventh section runs parallel to the fourth section, wherein the sections (16, 17, 16', 17') alternately enclose an angle (β'') which is between 90° and 165° and an angle (β"') which is between 15° and 90° with the radial direction and in this way give rise to a zig-zag profile of the indent (5^{VI})_{.}

15. Pneumatic tyre for a vehicle according to Claim 14, **characterized in that** the first section and every second section (15, 15', 15" , 15"') run at least essentially in the radial direction and have a width (d₁) which is between 0.4 mm 0.6 mm.

16. Pneumatic tyre for a vehicle according to Claim 14 or 15, **characterized in that** the sections (16, 16', 16" , 16"') which adjoin the sections (15, 15', 15" , 15"') which run essentially in the radial direction have a width which is two to four times the width of the sections (15, 15', 15" , 15"') which run in the radial direction.

17. Pneumatic tyre for a vehicle according to one of Claims 1 to 16, **characterized in that** profiled elements (2) each with at least two indents (5) with an inclination of the two sections (7) which is directed in opposition to one another with respect to the radials are provided in the tread (1).

18. Pneumatic tyre for a vehicle according to one of Claims 1 to 16, **characterized in that** at least one profiled element which has at least one indent (5^{VII}) whose second section (7^{VII}) is inclined in a specific direction with respect to the radial is provided in the tread, and **in that** at least one other profiled element which has at least one indent (5^{VII}) whose second section (7^{VII}) is inclined in the opposite direction to the second section (7^{VII}) of the indent (5^{VII}) in the first-mentioned profiled element (2) is provided in the tread.

## Revendications

1. Bandage pneumatique pour roue de véhicule présentant une bande de roulement profilée dotée d'éléments profilés (2) qui présentent une ou plusieurs entailles (5, 5' , 5'', 5''', 5^{IV}, 5^{V}, 5^{VI}) qui, vues en coupe radiale et transversalement à leur direction d'extension, sont constituées d'au moins trois parties (6, 7, 8; 6', 7', 8'; 6", 7", 8"; 6"', 7"', 8"', 6V^{II}, 7^{VII}, 8V^{II}, 10 à 14_{;} 6^{V}, 7^{V}, 8^{V}; 15 à 15'''; 16, 16', 17, 17') qui se raccordent les unes aux autres à la manière d'un zigzag, et dans lequel, vues de la surface (2') du profil, la première et la troisième partie (6, 7; 6', 8'; 6", 8"; 6"', 8'''; 6^{VII}, 8^{VII}; 10, 12; 6^{V}, 8^{V}, 15, 15') présentent une plus grande composante de direction radiale que la deuxième partie (7, 7', 7", 7"', 11, 7^{V}, 7^{VII}, 16) qui relie ces parties (6, 7; 6', 8'; 6", 8"; 6"', 8"'; 6^{VII}, 8^{VII}; 10, 12; 6^{V}, 8^{V}, 15, 15'),
**caractérisé en ce que**
la première partie (6, 6', 6", 10, 6^{V}, 15, 6^{VII}) présente une largeur constante et
**en ce que** la deuxième partie (7, 7', 7", 7"', 11, 7^{V}, 7^{VI}, 16) de l'entaille (5, 5', 5'', 5''', 5^{IV}, 5^{V}, 5^{VI}, 5^{VII}) est plus large que la troisième partie (6, 7; 6', 8'; 6", 8"; 6"', 8"', 10, 12; 6^{V}, 8^{V}, 6^{VII}, 8^{VII}, 15, 15') de l'entaille (5, 5', 5", 5''', 5^{IV}, 5^{V}, 5^{VI}, 5^{VII}).

2. Bandage pneumatique pour roue de véhicule selon la revendication 1, **caractérisé en ce que** la bande de roulement présente des éléments profilés (2) dotés chacun d'au moins une entaille (5, 5', 5", 5"', 5^{IV}, 5^{V}, 5^{VI}) qui s'étend essentiellement dans la direction axiale ou davantage dans la direction axiale que dans la direction périphérique.

3. Bandage pneumatique pour roue de véhicule selon la revendication 1, **caractérisé en ce que** la bande de roulement présente des éléments profilés (2) qui sont tous dotés d'au moins une entaille (5^{VII}) qui s'étend essentiellement dans la direction périphérique ou davantage dans la direction périphérique que dans la direction axiale.

4. Bandage pneumatique pour roue de véhicule selon l'une des revendications 1 à 3, **caractérisé en ce que** l'entaille (5, 5', 5", 5"', 5^{V}, 5^{VII}) est constituée de trois parties (6, 7, 8; 6', 7', 8'; 6", 7", 8"; 6"', 7"', 8''';6^{V}, 7^{V}, 8^{V}; 6^{VII}, 7^{VII}, 8^{VII}).

5. Bandage pneumatique pour roue de véhicule selon l'une des revendications 1 à 4, **caractérisé en ce que** la première et la troisième entaille (6, 7; 6', 8'; 6", 8", 6"', 8"'; 10, 12; 6^{V}, 8^{V}; 6^{VII}, 8^{VII}; 15, 15') s'étendent parallèlement l'une à l'autre.

6. Bandage pneumatique pour roue de véhicule selon l'une des revendications 1 à 5, **caractérisé en ce que** la première et la troisième entaille (6, 7; 6', 8'; 6", 8", 6"', 8"'; 10, 12; 6^{V}, 8^{V}; 6^{VII}, 8^{VII}; 15, 15') s'étendent au moins essentiellement dans la direction radiale.

7. Bandage pneumatique pour roue de véhicule selon l'une des revendications 1 à 5, **caractérisé en ce que** la première et la troisième entaille (6" , 8") s'étendent sous un angle aigu (γ) de jusqu'à 30° par rapport à la direction radiale.

8. Bandage pneumatique pour roue de véhicule selon l'une des revendications 1 à 7, **caractérisé en ce que** la deuxième entaille (7, 7', 7"', 7^{VII}, 11) s'étend sous un angle obtus (β) qui peut atteindre 165° par rapport à la direction radiale.

9. Bandage pneumatique pour roue de véhicule selon l'une des revendications 1 à 7, **caractérisé en ce que** la deuxième entaille (7^{V}) s'étend sous un angle aigu (β') qui vaut au moins 30° par rapport à la direction radiale.

10. Bandage pneumatique pour roue de véhicule selon l'une des revendications 1 à 9, **caractérisé en ce que** la deuxième entaille (7, 7', 7", 11, 7^{V}, 7^{VII}) présente une largeur (d₂) constante qui vaut du double au quadruple de la largeur de la troisième entaille (8, 8', 8", 12, 8^{V}, 8^{VII})_{.}

11. Bandage pneumatique pour roue de véhicule selon l'une des revendications 1 à 9, **caractérisé en ce que** la largeur de la deuxième entaille (7"') augmente de manière continue entre la troisième et la première entaille (8"', 6"').

12. Bandage pneumatique pour roue de véhicule selon l'une des revendications 1 à 11, **caractérisé en ce que** deux autres entailles (13, 14) réalisées de manière analogue à la deuxième et à la troisième entaille (11, 12) se raccordent à la troisième entaille (12).

13. Bandage pneumatique pour roue de véhicule selon l'une des revendications 1 à 11, **caractérisé en ce que** la première entaille (6') est plus large que la deuxième entaille (7').

14. Bandage pneumatique pour roue de véhicule selon l'une des revendications 1 à 13, **caractérisé en ce que** cinq autres parties (17, 15", 16', 15"', 17') se raccordent à la troisième partie (15'), la sixième s'étendant parallèlement à la deuxième et la septième parallèlement à la quatrième, ces entailles (16; 17', 16', 17') formant en alternance un angle (β") compris entre 90° et 165° et un angle (β"') compris entre 15° et 90° avec la direction radiale et donnant ainsi à l'entaille (5^{VI}) une évolution en zigzag.

15. Bandage pneumatique pour roue de véhicule selon la revendication 14, **caractérisé en ce que** la première et chaque deuxième entaille (15, 15', 15", 15"') s'étendent au moins essentiellement dans la direction radiale et ont une largeur (d₁) comprise entre 0,4 mm et 0,6 mm.

16. Bandage pneumatique pour roue de véhicule selon les revendications 14 ou 15, **caractérisé en ce que** la largeur des entailles (16, 16', 16", 16"') qui se raccordent aux entailles (15, 15', 15", 15"') qui s'étendent essentiellement dans la direction radiale représente le double au quadruple de la largeur des entailles (15, 15', 15", 15''') qui s'étendent dans la direction radiale.

17. Bandage pneumatique pour roue de véhicule selon l'une des revendications 1 à 16, **caractérisé en ce que** des éléments profilés (2) qui présentent chacun au moins deux entailles (5) dont la deuxième entaille (7) est inclinée dans la direction opposée par rapport à la direction radiale sont prévus dans la bande de roulement (1).

18. Bandage pneumatique pour roue de véhicule selon l'une des revendications 1 à 16, **caractérisé en ce qu'**au moins un élément profilé qui présente au moins une entaille (5^{VII}) dont la deuxième partie (7^{VII}) est inclinée dans une direction définie par rapport à la direction radiale est prévu dans la bande de roulement et **en ce qu'**au moins un autre élément profilé qui présente au moins une entaille (5^{VII}) dont la deuxième partie (7^{VII}) est inclinée dans la direction opposée à celle de la deuxième partie (7^{VII}) de l'entaille (5^{VII}) de l'élément profilé (2) cité en premier lieu est prévu dans la bande de roulement.
